# EUROPEAN PATENT APPLICATION

(11) **EP 2 833 524 A1**
(43) Date of publication of application: **04.02.2015**
(21) Application number: 13178948.9
(22) Date of filing: 01.08.2013
(51) Int. Cl.: H02K 9/22, H02K 7/14, H02K 9/04

(54) **An electric motor**

(71) Applicant: ABB Technology AG, 8050 Zürich (CH)
(72) Inventor: Secondo, Giulio, 16125 Genova (GE) (IT)
(74) Representative: De Bortoli, Eros

(57) **Abstract**

An electric motor (1) comprising a stator assembly (2), a rotor assembly (3), which is operatively associated to said stator assembly, and a rotating shaft (4) having a rotor section (41), at which said rotating shaft is solidly fixed to said rotor assembly, and a load section (42), at which said rotating shaft is operatively connected with a mechanical load (5). The electric motor comprises heat exchanging means (6, 7, 8), which are operatively associated to said rotating shaft at said load section (42) to remove heat from said rotating shaft, said heat exchanging means solidly rotating with said rotating shaft during the operation of said electric motor.

## Description

The present invention relates to the field of electric motors.

More particularly, the present invention refers to an electric motor provided with an improved cooling arrangement, which reduces the amount of heat transmitted along the motor shaft, towards the mechanical load that is operatively connected to the electric motor.

As is known, an electric motor comprises a stator assembly, a rotor assembly, which is operatively associated to the stator assembly, and a rotating shaft, which is solidly connected to the rotor assembly, so that the mechanical power generated by the rotor assembly, during the operation of the electric motor, is transmitted to a mechanical load.

As is also known, heat generated at the stator assembly and/or at the rotor assembly is transmitted (at least partially) along the motor shaft towards the mechanical load.

Some motor driven mechanical systems require that the amount of heat transmitted along the shaft is relatively small in order to avoid excessive increase of temperature at the mechanical connections between the motor shaft and the mechanical load.

For example, in electro-mechanical systems for driving elevators, the connection belts, which mechanically connect the motor shaft with the elevator cabin (the mechanical load), are often made, at least partially, of materials (such as rubber) that cannot be brought at high temperatures to ensure proper safety levels.

A first approach to face this technical issue may be to properly arrange the electric motor structure in such a way that the amount of heat generated during operation is relatively small. This solution entails the drawback that the electric motor is necessarily subject to remarkable design constraints, e.g. in using active materials (e.g. materials for the magnetic sheets) in the stator and/or rotor assembly.

This may lead to relatively poor performances and/or to an increase of the manufacturing costs, since it is necessary to oversize the motor structure to ensure that the shaft does not overcome certain temperature limits during operation.

A further approach may be to arrange ventilation fans at the mechanical connections between the rotating shaft and the mechanical load.

This solution may not be easily implemented in applications (e.g. elevator systems), in which relatively low noise levels are typically required.

It is an aim of the present invention to provide an electric motor that solves the above-mentioned technical issues.

More in particular, it is an object of the present invention to provide an electric motor, in which the amount of heat transmitted along the motor shaft (at given operative conditions) can be remarkably reduced with respect to the solutions of the state of the art.

As a further object, the present invention is aimed at providing an electric motor, in which it is possible to properly exploit active materials in realizing the stator assembly and/or in the rotor assembly.

As a further object, the present invention is aimed at providing an electric motor, which is adapted for usage in low noise applications.

Still another object of the present invention is to provide an electric motor, which has a relatively robust and reliable structure and which can be industrially manufactured at competitive costs with respect to solutions of state of the art.

These objects, together with other objects that will be more apparent from the subsequent description and from the accompanying drawings, are achieved by an electric motor according to the following claim 1 and the related dependent claims, which refer to preferred embodiments of the present invention.

In a general definition, the electric motor, according to the invention, comprises a stator assembly, a rotor assembly, which is operatively associated to the stator assembly, and a rotating shaft having a rotor section, at which the rotating shaft is solidly fixed to the rotor assembly, and a load section, at which the rotating shaft is operatively connected with a mechanical load.

The electric motor, according to the invention, comprises heat exchanging means, which are operatively associated to the rotating shaft at said load section to remove heat from said rotating shaft.

According to the invention, said heat exchanging means are arranged so that they solidly rotate with the rotating shaft during the operation of the electric motor.

Preferably, said heat exchanging means comprise one or more fins that are operatively connected with the rotating shaft to solidly rotate with this latter.

Preferably, said fins are disc-shaped fins centered with the rotating shaft and having different diameters.

Preferably, said disc-shaped fins are arranged so that they are oriented perpendicularly with respect to a main longitudinal axis of the rotating shaft.

Preferably, said heat exchanging means comprise at least a disc-shaped fin having a diameter that is selected so that said disc-shaped fin forms at least a barrier capable of blocking or reducing the passage of air between adjacent portions of a first internal space of the electric motor, at the load section of the rotating shaft.

Conveniently, the diameter of such a disc-shaped fin is selected so as to be slightly smaller than the internal diameter of a casing structure that externally encloses the portions of internal space separated by said disc-shaped fin.

In a preferred embodiment of the present invention, said heat exchanging means comprise primary heat exchanging means and secondary heat exchanging means, which are advantageously positioned along the length of the rotating shaft at a shorter and at a longer distance from the rotor section of the rotating shaft, respectively.

Preferably, the primary heat exchanging means comprises at least a first group of first disc-shaped fins having different diameters and arranged along the length of the rotating shaft, so that the diameter of said first disc-shaped fins increases moving away from the rotor section of the rotating shaft.

Preferably, the secondary heat exchanging means comprises one or more second groups of second disc-shaped fins that may have different diameters.

Preferably, said second groups of second disc-shaped fins are mutually positioned along the length of the rotating shaft, so as to define one or more seats to accommodate mechanical connection means that operatively connect the rotating shaft with the mechanical load.

In some possible embodiments of the invention, the electric motor may be of the frameless type.

In this case, the electric motor may comprise a front casing that is operatively associated to a front side of the stator assembly, which is oriented towards the load section of the rotating shaft, and a back casing that is operatively associated to a back side of the stator assembly, which is opposite to the front side of the stator assembly.

Preferably, the front casing of the electric motor comprises first air inlet holes, which are arranged to allow air coming from the external environment to flow towards the internal volume of the electric motor.

Preferably, the front casing of the electric motor comprises first air outlet holes, which are arranged to allow air flowing towards the load section of the rotating shaft to exit towards the external environment.

Preferably, the electric motor comprises ventilation means to blow air coming from the external environment towards the internal volume of the electric motor.

Preferably, said ventilation means are operatively positioned at said first air inlet holes to blow air coming from the external environment towards the stator assembly, the rotor assembly and the rotating shaft.

Advantageously, the front casing of the electric motor is arranged so that hot air flowing along the load section of the rotating shaft is allowed to pass through said first air outlet holes to exit towards the external environment.

Preferably, the back casing of the electric motor comprises second air outlet holes, which are arranged to allow air flowing through the stator assembly and/or the rotor assembly to exit towards the external environment.

Preferably, the back casing of the electric motor comprises tertiary heat exchanging means to remove heat transmitted through said back casing.

In principle, the electric motor of the invention may be of any type, depending on the industrial application in which it is adopted.

For example, the electric motor, according to the invention, may be a Permanent Magnet Assisted Synchronous Reluctance (PSMAR) motor or an AC Asynchronous motor or a Synchronous Reluctance motor or a Brushless Synchronous motor with surface mounted magnets or with interior mounted magnets.

Further characteristics and advantages of the present invention will be more apparent with reference to the description given below and to the accompanying figures, provided purely for explanatory and non-limiting purposes, wherein:
- Fig. 1 schematically shows a perspective view of the electric motor, according to the present invention;
- Fig. 2 schematically shows a sectional view of the electric motor, according to the present invention;
- Fig. 3 schematically shows a further perspective view of the electric motor, according to the present invention;
- Fig. 4 schematically shows a further sectional view of the electric motor, according to the present invention;
- Fig. 5 schematically shows a reversed perspective view of the electric motor, according to the present invention;
- Figs. 6-7 schematically show some perspective views of a front casing of the electric motor, according to the present invention;
- Figs. 8-9 schematically show some perspective views of a back casing of the electric motor, according to the present invention;
- Fig. 10 schematically shows a sectional view of the rotating shaft of the electric motor, according to the present invention;
- Fig. 11 schematically shows perspective views of primary heat exchanging means operatively associated to the rotating shaft of Fig. 1;
- Fig. 12 schematically shows perspective views of secondary heat exchanging means operatively associated to the rotating shaft of Fig. 1.

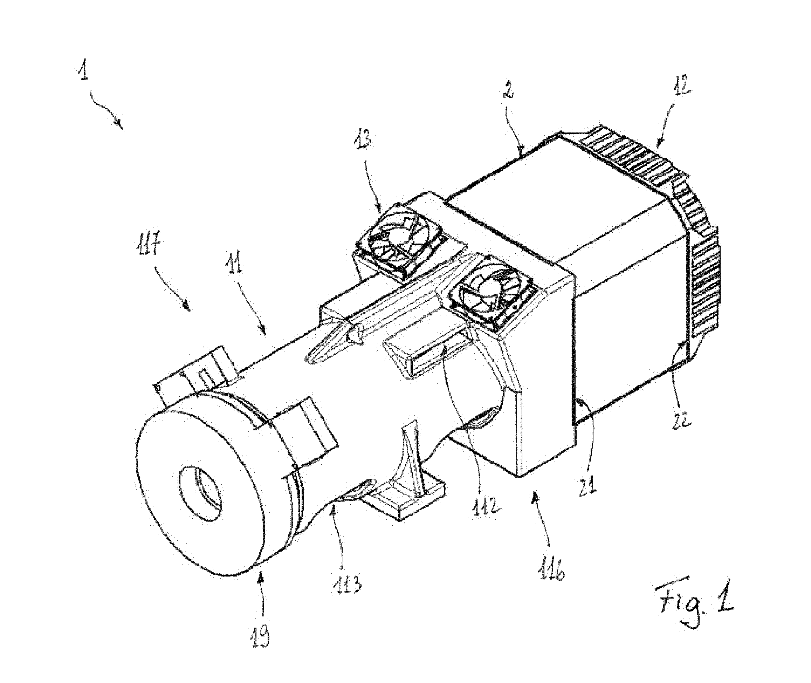

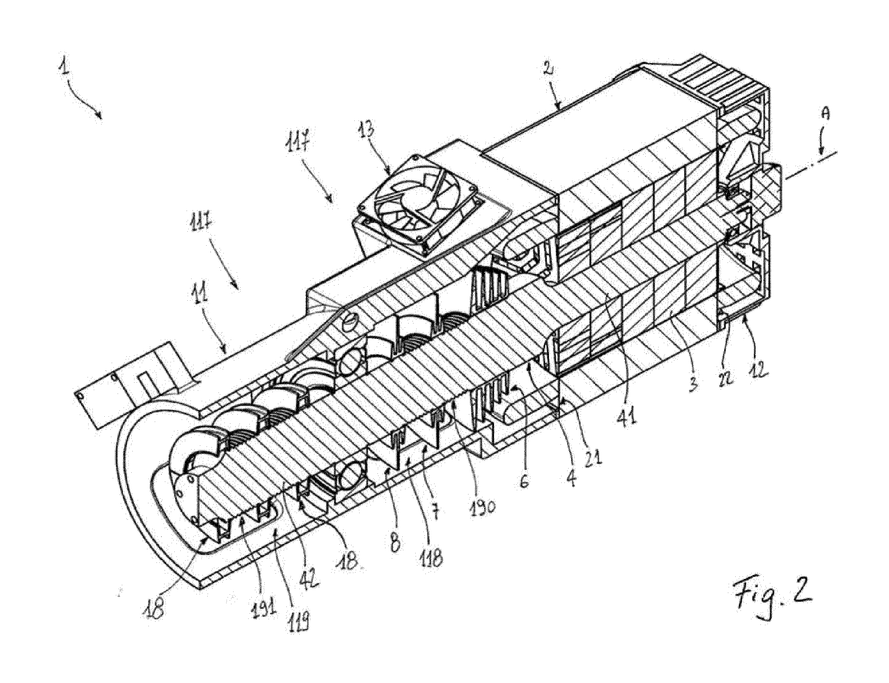

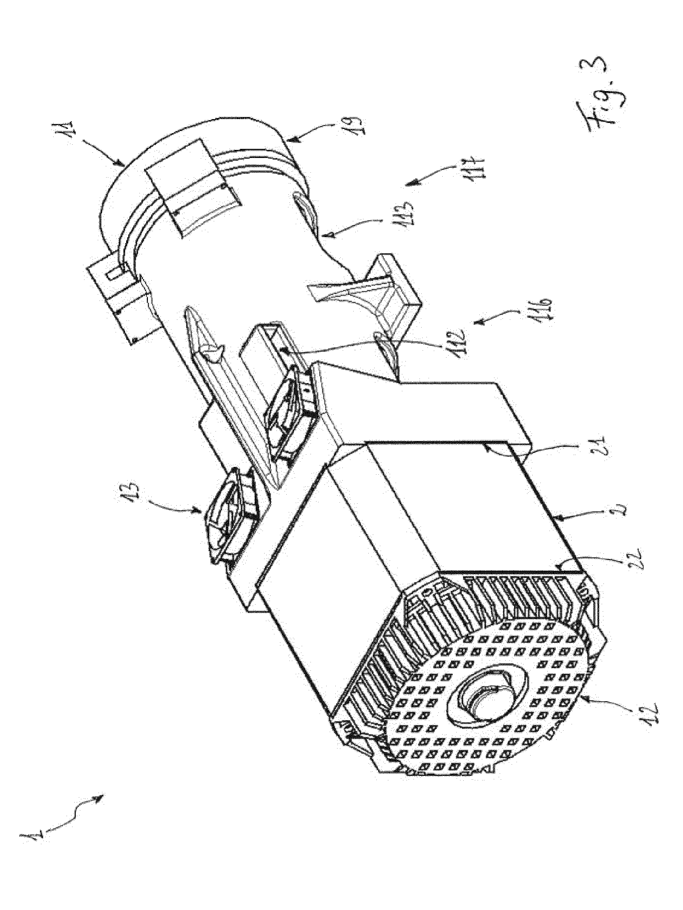

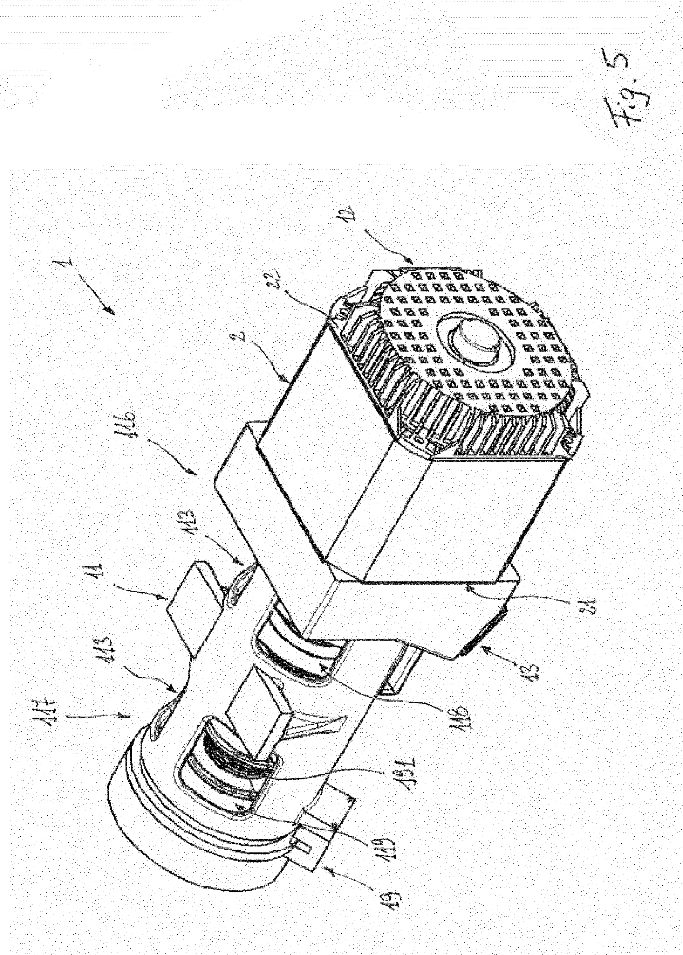

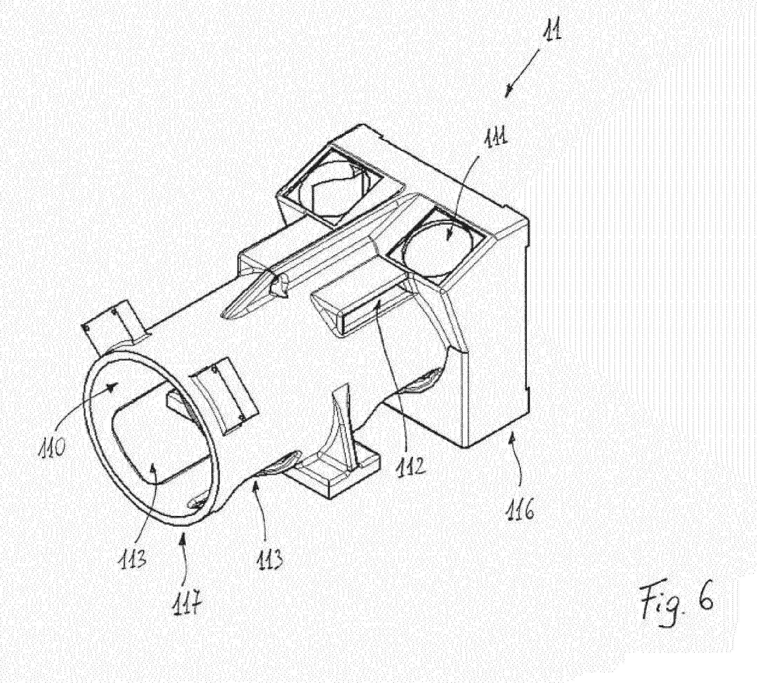

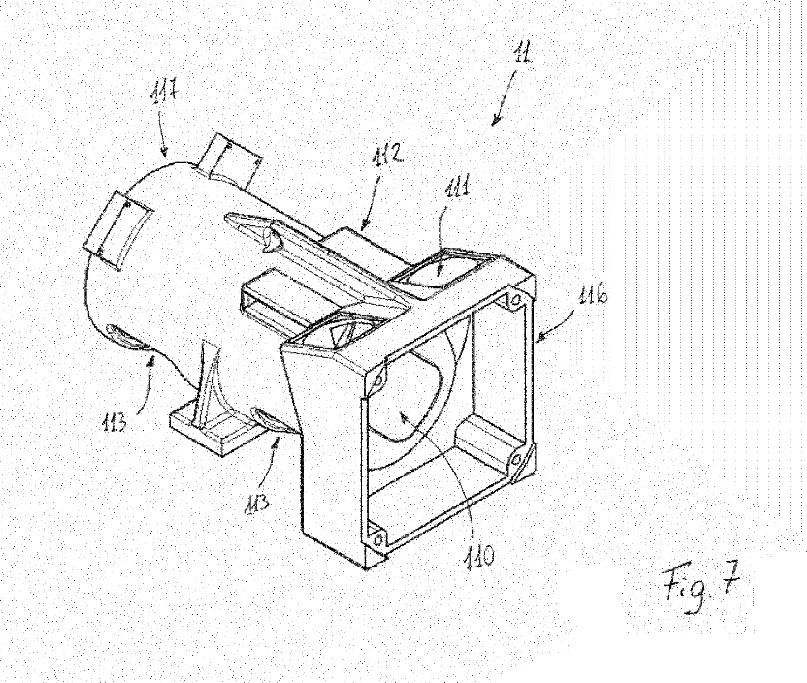

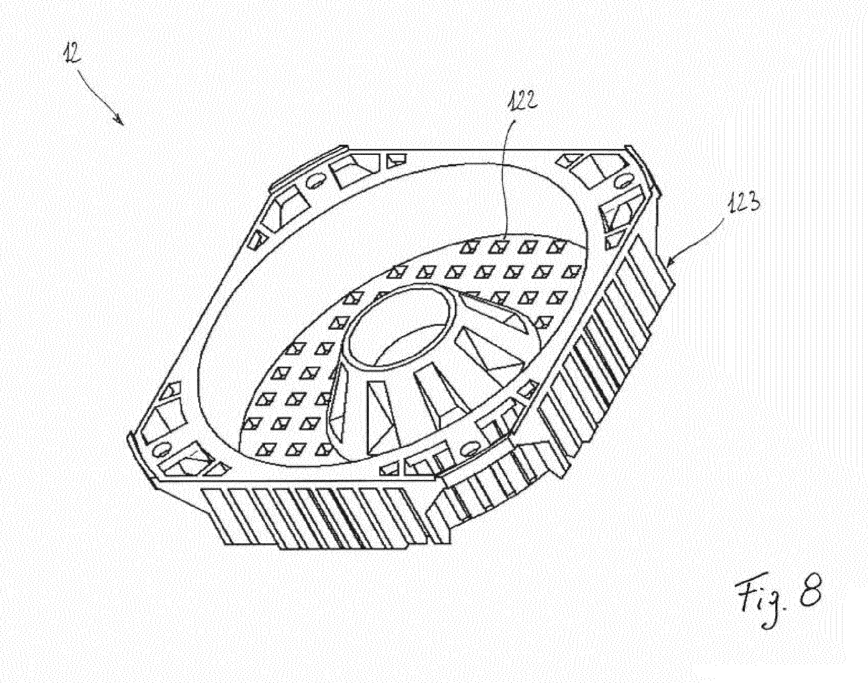

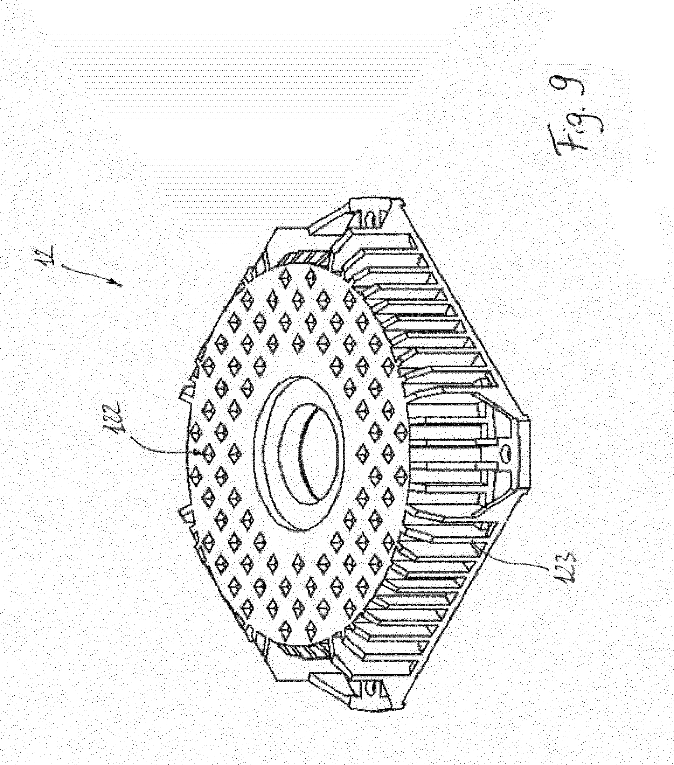

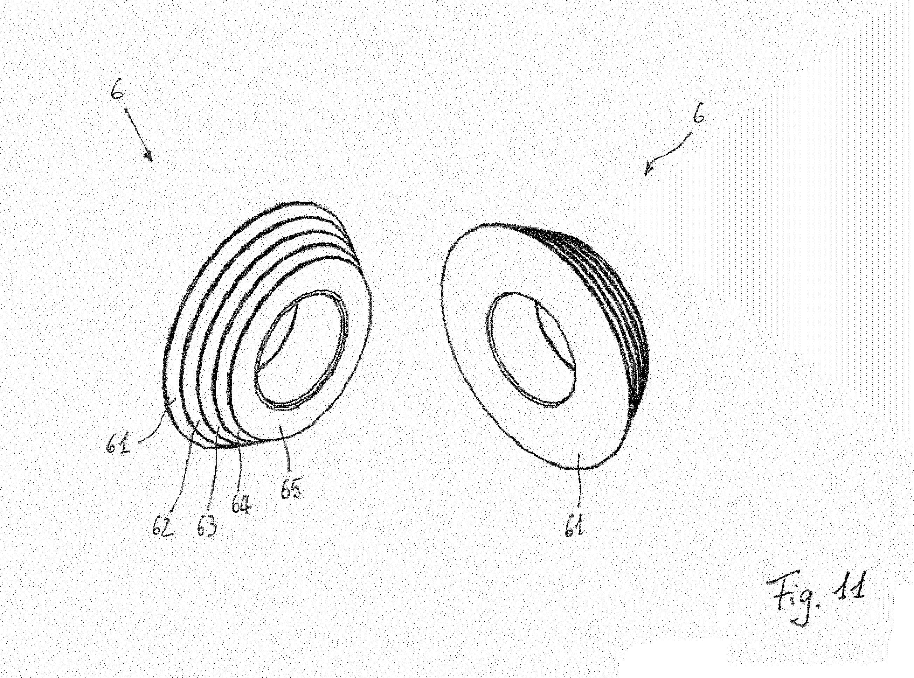

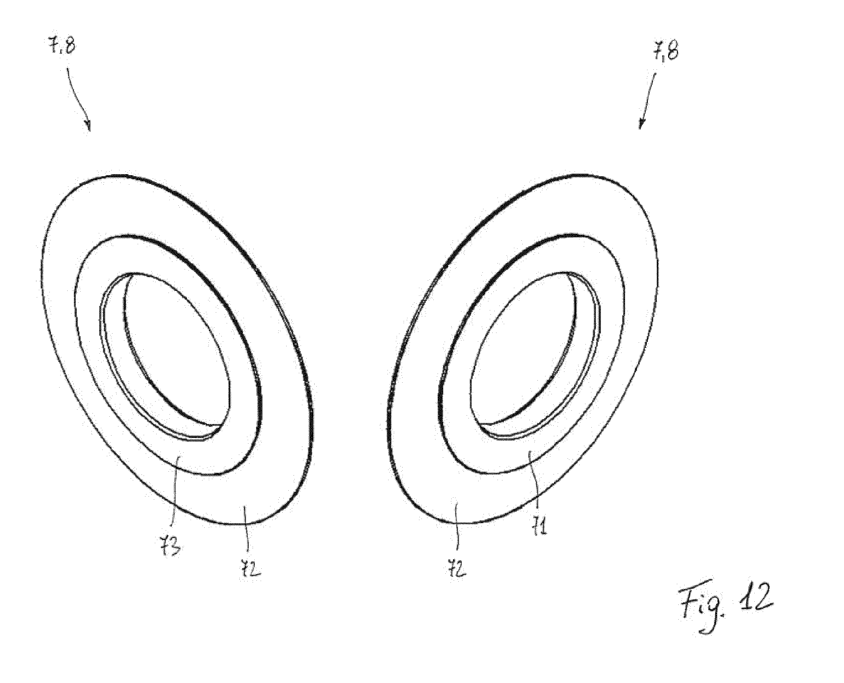

With reference to Figs. 1-12, the present invention relates to an electric motor 1.

For the sake of simplicity, the electric motor 1 will be now described with particular reference to its usage in electro-mechanical systems for driving elevators.

It is obviously intended that the electric motor 1 may be adopted in different fields of application, according to the needs.

The electric motor 1 comprises a stator assembly 2, a rotor assembly 3 and a rotating shaft 4 having a rotor section 41, at which it is solidly fixed to the rotor assembly 3, and a load section 42, at which it is operatively connected with a mechanical load (not shown).

As an example, said mechanical load can be formed by an elevator cabin, which is operatively connected to the shaft 4 by means of properly arranged connection means (not shown), such as connection belts.

The stator assembly 2 may be of a known type, according to the needs.

Preferably, it comprises shaped magnetic sheets (not shown) that may be welded together and reinforced with longitudinal steel plates. Alternative techniques (such as riveting, gluing, and the like) may be adopted to join the magnetic sheets together.

Conveniently, the magnetic sheets of the stator assembly 2 are arranged so as to define shaped stator seats for the stator windings (not shown) and, possibly, stator channels (not shown) for the passage of cooling air.

Stator windings may be formed by winding coils covered by an insulating material to ensure electrical insulation with respect to the magnetic sheets.

The stator assembly 2 may be of the frameless type, i.e. having magnetic sheets not enclosed by an external case.

The stator assembly 2 comprises a front side 21, which is oriented towards the load section 42 of the shaft 4, and a back side 22, which is positioned opposite with respect to the front side 21.

As it will be illustrated in the following, the stator assembly 2 may be operatively associated to a front casing 11 (preferably made of cast iron) and to a back casing 12 (preferably made of cast aluminum) of the electric motor 1, at its front side 21 and at its back side 22, respectively. Also the rotor assembly 3 may of a known type, according to the needs.

Preferably, the rotor assembly 3 has a structure including a plurality of shaped ferrite or rare-earth magnets, which may be screwed or otherwise joined along the length of the rotor section 41 of the shaft 4.

Conveniently, rotor members are properly arranged so as to define rotor channels (not shown) for the passage of cooling air.

The shaft 4 may be obtained by means of known metallurgic processes, such as molding or extrusion.

The rotor assembly 3 may be operatively connected to the rotor section 41 of the shaft 4 in a known way.

Along the load section 42 of the shaft 4, first and second seats 190, 191 are conveniently arranged for mechanical connection means (e.g. connection belts) to operatively connect the shaft 4 to the mechanical load.

At the seats 190-191, the external surface of the shaft 4 may be properly arranged (e.g. by a knurling process) to improve the transmission of mechanical power to the mechanical connection means operatively associated thereof.

The electric motor 1 may comprise shaped guides 18, which are solidly connected to the load section 42 of the shaft 4 to define at least some of the seats 190, 191.

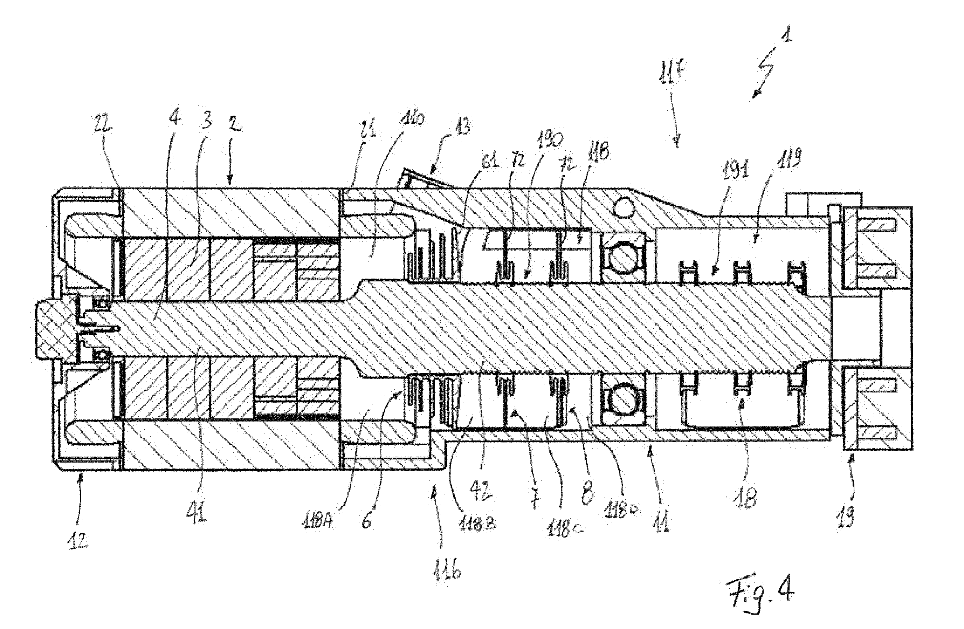

The guides 18 may be of known type and their shape may be any, depending on the needs. Preferably, the front casing 11 of the electric motor 1 is arranged to define a first internal space 110 (Figs. 4, 6-7), in which the load section 42 of the shaft 4 is accommodated. Preferably, the front casing 11 has a substantially tubular structure, which comprises a proximal portion 116 and a distal portion 117 with respect to the rotor section 41 of the shaft 4.

At the proximal portion 116, the front casing 11 may be operatively associated (e.g. by known connecting means) to the front side 21 of the stator assembly 2.

At the distal portion 117, the front casing 11 is operatively associated (e.g. by known connecting means) to breaking means 19 of the electric motor 1.

Preferably, the front casing 11 of the electric motor comprises one or more ports 113, through which mechanical connection means can pass to operatively connect the shaft 4 to the mechanical load.

Conveniently, the ports 113 of the front casing 11 are positioned at the seats 190, 191 defined on the load section 42 of the shaft 4.

Preferably, the front casing 11 of the electric motor comprises first air inlet holes 111 to allow the passage of air coming from the external environment towards the internal volume of the electric motor 1.

Preferably, the electric motor 1 comprises ventilation means 13 to blow air coming from the external environment towards the internal volume of the electric motor 1.

Air blown by the ventilation means 13 passes through the cooling channels of the stator assembly 2, through the cooling channels of the rotor assembly 3 and through the internal space 110 defined by the front casing 11.

Preferably, the ventilation means 13 are operatively positioned at the air inlet holes 111, which are in turn arranged (i.e. positioned and shaped) so that said ventilation means are capable to blow at least a portion of the air coming from the external environment directly towards the load section 42 of the shaft 4.

Preferably, the air inlet holes 111 are positioned at the proximate portion 116 of the front casing 11.

This solution is quite advantageous since it allows obtaining an effective cooling of the shaft 4 at a proximal region (with respect to the rotor section 41) of the load section 42.

Preferably, the front casing 11 of the electric motor comprises first air outlet holes 112, which are arranged to allow at least a portion of the air flowing through the internal volume of the electric motor 1 to exit towards the external environment.

In particular, the first air outlet holes 112 are positioned so that at least a portion of the air flowing through the internal space 110 of the front casing 11 can exit towards the external environment.

Preferably, the back casing 12 of the electric motor 1 comprises second air outlet holes 122, which are arranged to allow at least a further portion of the air flowing through the internal volume of the electric motor 1 to exit towards the external environment.

In particular, the second air outlet holes 122 are positioned so that at least a portion of the air flowing through the stator assembly 2 and/or through the rotor assembly 3 can exit towards the external environment.

In particular, the second air outlet holes 122 are positioned so as to form a grid operatively associated to the back side 22 of the stator assembly 2.

Preferably, the electric motor 1 is operatively associated to control means (not shown) and power supply means (not shown), which may be of known type.

According to the present invention, the electric motor 1 comprises heat exchanging means 6, 7, 8, which are operatively associated to the shaft 4 at the load section 42 of this latter.

The heat exchanging means 6, 7, 8 are advantageously adapted to remove heat from the shaft 4, in particular the heat flowing from the stator and/or rotor assembly towards the mechanical load, along the load section 42 of the shaft 4.

The heat exchanging means 6, 7, 8 are operatively connected with the load section 42 of the shaft 4, so as to solidly rotate with the shaft 4 during the operation of the electric motor 1. The heat exchanging means 6, 7, 8 may be mechanically connected to the load section 42 of the shaft 4 by means known industrial processes, such as soldering, heat fitting, pressing, brazing and the like.

As an alternative, the heat exchanging means 6, 7, 8 may be formed in a single piece with the shaft 4, e.g. by means of a molding process.

The heat exchanging means 6, 7, 8 may also be mechanically connected in a removable manner (e.g. screwed) with the shaft 4.

Preferably, the mentioned heat exchanging means comprise one or more fins 61, 62, 63, 64, 65, 71, 72, 73 that are mechanically connected with the shaft 4, so as to solidly rotate with this latter.

One of the above described solutions may be used to operatively connect said fins with the shaft 4.

Preferably, the fins 61, 62, 63, 64, 65, 71, 72, 73 are made of one or more metallic materials, e.g. steel.

Preferably, the fins 61, 62, 63, 64, 65, 71, 72, 73 are disc-shaped fins centered with the shaft 4.

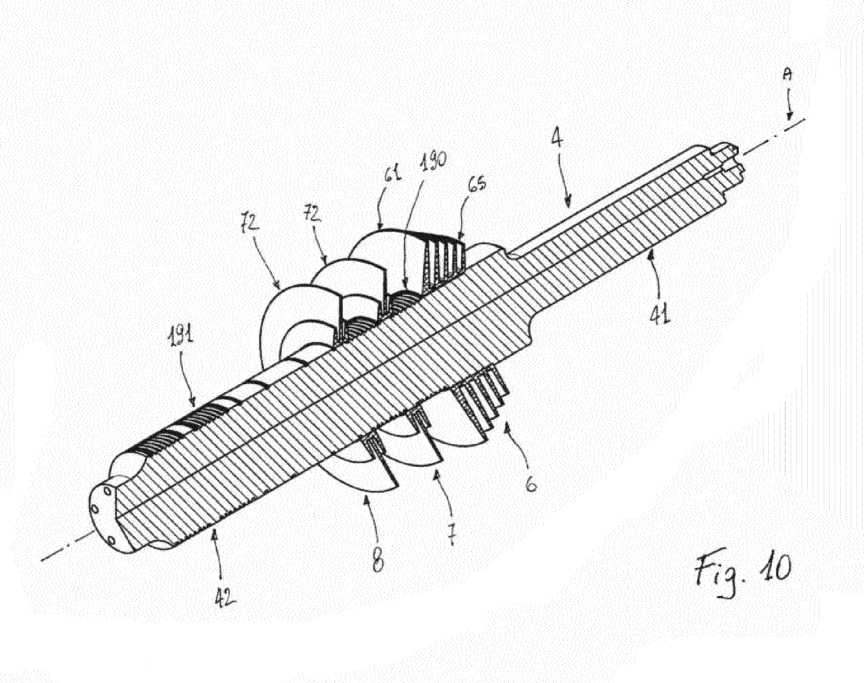

Preferably, the fins 61, 62, 63, 64, 65, 71, 72, 73 are positioned, so as to be substantially perpendicular with respect to a main longitudinal axis A of the shaft 4 (Fig. 10). Conveniently, the fins 61, 62, 63, 64, 65, 71, 72, 73 are formed by shaped metallic discs that surround at least partially the external perimeter of the shaft 4.

This solution is quite advantageous since it allows obtaining a relatively large extension of the overall heat exchange surface without creating relevant turbulence phenomena on the hot air flowing along the load section 42 of the shaft 4, thereby reducing the overall noise levels during the operation of the electric motor 1.

Preferably, the disc-shaped fins 61, 62, 63, 64, 65, 71, 72, 73 have different diameters, as shown in the embodiments of the present invention illustrated in Figs. 1-12.

As it will be apparent from the following, such a solution allows effectively conveying hot air towards the external environment, thereby further reducing the heat flux towards the mechanical load.

The disc-shaped fins 61, 62, 63, 64, 65, 71, 72, 73 may be arranged along the length of the shaft 4 according to various configurations.

According to a first configuration, they may be arranged along the length of the shaft 4, so that the diameter of the disc-shaped fins increases moving away from the rotor section 41 of the shaft 4 (i.e. moving towards the mechanical load).

According to a second configuration, they may be arranged along the length of the shaft 4, so that one or more fins 71, 73 having smaller diameter are alternate with one or more fins 72 having a larger diameter.

Other configurations may be possible to the skilled person, according to the needs.

The fins 61, 62, 63, 64, 65, 71, 72, 73 may also have a different shape with respect to the embodiments described above.

Preferably, the heat exchanging means 6, 7, 8 comprise one or more disc-shaped fins (see e.g. fins 61, 72 of Fig. 4) having a diameter that is selected so that said disc-shaped fins form one or more barriers capable of blocking or reducing the passage of air between adjacent portions 118A, 118B, 118C, 118D of a first internal space 110 of the electric motor, in which said disc-shaped fins are accommodated (see Fig. 4).

Portions 118A, 118B, 118C, 118D of the internal space 110 are positioned along the length of the rotating shaft 4, at the load section 42 of this latter, and are separated by the disc-shaped fins 61, 72.

Conveniently, the diameter of the disc-shaped fins 61, 72 is selected so as to be slightly smaller than the internal diameter of a casing structure (e.g. the front casing 11) that encloses the adjacent portions 118A, 118B, 118C, 118D of the internal space 110.

This solution is quite advantageous since it allows reducing or blocking the flow of hot air from hot parts of the electric motor (e.g. the stator assembly 2 and/or the rotor assembly 3) towards the load section 42 of the rotating shaft 4 (i.e. towards the mechanical load). Preferably, the mentioned heat exchanging means comprise primary heat exchanging means 6 and secondary heat exchanging means 7, 8, which are operatively associated to the load section 42 of the shaft 4.

Preferably, the primary heat exchanging means 6 and the secondary heat exchanging means 7, 8 are positioned along the length of the shaft 4 at a shorter and at a longer distance from the rotor section 41 of the shaft 4, respectively.

Preferably, the primary heat exchanging means 6 are positioned at the proximal portion 116 of the front casing 11 in the proximity of the first air outlet holes 112.

Preferably, said primary heat exchanging means comprises at least a first group 6 of first disc-shaped fins 61, 62, 63, 64, 65.

Preferably, the first disc-shaped fins 61, 62, 63, 64, 65 have different diameters and are arranged along the length of the shaft 4, so that their diameter increases moving away from the rotor section 41 of the shaft 4.

Conveniently, the diameter of the largest first disc-shaped fin 61 is selected so as to be slightly smaller than the internal diameter of the front casing 11.

In this way, in addition to reducing the heat transmitted along the load section 2 of the shaft 4, the primary heat exchanging means are capable of effectively conveying air circulating through the internal space 110 of the front casing 11 towards the first air outlet holes 112, thereby reducing the flux of hot air towards the mechanical load (i.e. towards the portions 118B, 118C, 118D of the internal space 110).

Preferably, said secondary heat exchanging means comprise one or more second groups 7, 8 of second disc-shaped fins 71, 72, 73.

Preferably, the second disc-shaped fins 71, 72, 73 of each of said second groups have different diameters.

Preferably, the second disc-shaped fins 71, 72, 73 are arranged along the length of the shaft 4, so that one or more second disc-shaped fins 71, 73 having a smaller diameter are alternate with one or more second disc-shaped fins 72 having a larger diameter.

According to some the embodiments of the present invention, also the diameter of the largest second disc-shaped fin 72 may be selected so as to be slightly smaller than the internal diameter of the front casing 11 in order to further reduce the flux of hot air towards the mechanical load.

In further embodiments of the present invention, however, only the primary exchanging means 6 comprise one or more fins 61 having a diameter slightly smaller than the internal diameter of the front casing 11.

Preferably, the secondary heat exchanging means comprise a plurality of second groups 7, 8 of disc-shaped fins 71, 72, 73.

Preferably, the second groups 7, 8 are mutually positioned along the length of the shaft 4, so as to define one or more first seats 190 to accommodate the mechanical connection means that operatively connect the shaft 4 with said mechanical load.

This allows avoiding the usage of dedicated shaped guides 18, thereby simplifying the overall structure of the electric motor 1.

Preferably, the front casing 11 comprises a first chamber 118, in which the primary heat exchanging means and the secondary heat exchanging means 7, 8 are arranged.

Within the first chamber 118, the first seats 190 for accommodating the mechanical connection means are defined by a plurality of second groups 7, 8 of second disc-shaped fins 71, 72, 73.

Preferably, the front casing 11 comprises a second chamber 119, in which the second seats 191 for accommodating the mechanical connection means are defined by a plurality of shaped guides 18.

Preferably, the first chamber 118 and the second chamber 119 are positioned along the length of the shaft 4 at a shorter and at a longer distance from the rotor section 41 of the shaft 4, respectively.

Of course, within the first chamber 118, the primary and secondary heat exchanging means 6, 7, 8 are positioned at a shorter and at a longer distance from the rotor section 41 of the shaft 4, respectively.

Preferably, the back casing 12 comprises further heat exchanging means 123 (formed by a plurality of third shaped fins) to remove heat generated by the stator assembly 2 and/or the rotor assembly 3 from said back casing.

It is apparent from the above that the electric motor, according to the invention, provides a number of advantages with respect to the state of the art.

In the electric motor of the invention, thanks to the presence of the heat exchanging means 6, 7, 8 solidly connected with the shaft 4, the amount of heat transmitted along the motor shaft can be remarkably reduced with respect to the solutions of the state of the art.

The shaft 4 can thus be selectively cooled at its load section 42, i.e. in the proximity of the mechanical connections with the mechanical load. This allows the mechanical connection means with the mechanical load to operate in optimal conditions.

On the other hand, the stator assembly 2 and/or the rotor assembly 3 can be realized without particular designing constraints deriving from the need of operating at low temperatures. This allows properly exploiting the active materials used in such motor arrangements and reducing the overall manufacturing costs.

The arrangement of the ventilation means 13 at the proximal portion 116 of the front casing 13 allows effectively cooling the load section 42 of the shaft 4, thereby reducing the amount of heat transmitted towards the mechanical load. The shaft 4 can be locally cooled at its load section 42, without the usage of dedicated ventilation fans to blow air on the mechanical connection means that operatively connect the mechanical load and the shaft 4.

The electric motor 1 has thus proven to offer relatively low noise levels and is therefore quite adapted for usage low noise applications, such as in elevator systems.

Of course, the electric motor 1 can be successfully used in applications, in which achieving low noise levels does not represent a relevant design constraint.

The electric motor, according to the invention, has a relatively simple structure that can be easily installed on the field, at relatively low costs.

The electric motor, according to the invention, is of relatively easy industrial production, at competitive costs with respect to traditional solutions of the state of the art.

## Claims

1. An electric motor (1) comprising a stator assembly (2), a rotor assembly (3), which is operatively associated to said stator assembly, and a rotating shaft (4) having a rotor section (41), at which said rotating shaft is solidly fixed to said rotor assembly, and a load section (42), at which said rotating shaft is operatively connected with a mechanical load (5), characterised it comprises heat exchanging means (6, 7, 8), which are operatively associated to said rotating shaft at said load section (42) to remove heat from said rotating shaft, said heat exchanging means solidly rotating with said rotating shaft during the operation of said electric motor.

2. An electric motor, according to claim 1, **characterised in that** said heat exchanging means comprise one or more fins (61, 62, 63, 64, 65, 71, 72, 73) that are mechanically connected with said rotating shaft, so as to solidly rotate with said rotating shaft.

3. An electric motor, according to claim 2, **characterised in that** said fins (61, 62, 63, 64, 65, 71, 72, 73) are disc-shaped fins centered with said rotating shaft and oriented perpendicularly with respect to a main longitudinal axis (A) of said rotating shaft.

4. An electric motor, according to claim 3, **characterised in that** said disc-shaped fins (61, 62, 63, 64, 65, 71, 72, 73) have different diameters.

5. An electric motor, according to one or more of previous claims, **characterised in that** said heat exchanging means (6, 7, 8) comprise at least a disc-shaped fin (61, 72) having a diameter that is selected so that said at least a disc-shaped fin forms at least a barrier capable of blocking or reducing the flow of air between adjacent portions (118A, 118B, 118C, 118D) of a first internal space (110) of the electric motor.

6. An electric motor, according to one or more of previous claims, **characterised in that** said heat exchanging means comprise primary heat exchanging means (6) and secondary heat exchanging means (7, 8), which are positioned along the length of said rotating shaft respectively at a shorter and at a longer distance from said rotor section (41).

7. An electric motor, according to claim 6, **characterised in that** said primary heat exchanging means comprises one or more first groups (6) of first disc-shaped fins (61, 62, 63, 64, 65), said first disc-shaped fins having different diameters and being arranged along the length of said rotating shaft, so that the diameter of said first disc-shaped fins increases moving away from said rotor section (41).

8. An electric motor, according to one or more of claims from 6 to 7, **characterised in that** said secondary heat exchanging means comprises one or more second groups (7, 8) of second disc-shaped fins (71, 72, 73), said second disc-shaped fins having different diameters and being arranged along the length of said rotating shaft, so that one or more second disc-shaped fins (71, 73) having smaller diameter are alternate with one or more second disc-shaped fins (72) having a larger diameter.

9. An electric motor, according to claim 8, **characterised in that** said second groups (7, 8) of second disc-shaped fins (71, 72, 73) are mutually positioned along the length of said rotating shaft, so as to define one or more first seats (190) to accommodate mechanically connection means that mechanically connect said rotating shaft with said mechanical load.

10. An electric motor, according to one or more of previous claims, **characterised in that** it said stator assembly (2) is of the frameless type, said electric motor comprising a front casing (11), which is operatively associated to a front side (21) of said stator assembly, which is oriented towards said load section (42), and a back casing (12), which is operatively associated to a back side (22) of said stator assembly, which is opposite to said front side.

11. An electric motor, according to claim 10, **characterised in that** said front casing (11) comprises first air inlet holes (111), which are arranged to allow air coming from the external environment to flow towards the internal volume of said electric motor.

12. An electric motor, according to one or more of claims from 10 to 11, **characterised in that** said front casing (11) comprises first air outlet holes (112), which are arranged to allow air flowing towards said load section (42) to exit towards the external environment

13. An electric motor, according to one or more of claims from 10 to 12, **characterised in that** said back casing (12) comprises second air outlet holes (122), which are arranged to allow air flowing through said stator assembly and/or said rotor assembly to exit towards the external environment.

14. An electric motor, according to one or more of previous claims, **characterised in that** it comprises ventilation means (13) to blow air coming from the external environment towards the internal volume of said electric motor.
